(19) Europäisches Patentamt
European Patent Office
Office européen des brevets

(11) EP 4 628 608 A1

(12) EUROPEAN PATENT APPLICATION
published in accordance with Art. 153(4) EPC

(43) Date of publication:
**08.10.2025 Bulletin 2025/41**

(21) Application number: **23897225.1**

(22) Date of filing: **21.09.2023**

(51) International Patent Classification (IPC):
***C22B 3/24*** *(2006.01)* ***C08G 75/0281*** *(2016.01)*
***B01J 20/26*** *(2006.01)*

(52) Cooperative Patent Classification (CPC):
**B01D 15/08; B01D 15/00; B01D 15/3828; B01J 20/26; B01J 20/262; B01J 20/321; C08G 75/0281; C22B 3/24**

(86) International application number:
**PCT/JP2023/034216**

(87) International publication number:
**WO 2024/116566 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190126**

(71) Applicant: **DIC Corporation**
**Tokyo 174-8520 (JP)**

(72) Inventors:
- **IBARAKI, Taku**
  **Ichihara-shi, Chiba 290-8585 (JP)**
- **FURUSAWA, Takashi**
  **Ichihara-shi, Chiba 290-8585 (JP)**
- **IKEDA, Mai**
  **Ichihara-shi, Chiba 290-8585 (JP)**

(74) Representative: **Kraus & Lederer PartGmbB**
**Thomas-Wimmer-Ring 15**
**80539 München (DE)**

# (54) SEPARATION METHOD AND LIQUID PRODUCTION METHOD

(57) To provide a method for efficiently separating a metal atom, which is a substance to be separated, from a liquid containing the substance to be separated and an organic solvent. More specifically, a method for separating a substance to be separated from a liquid containing the substance to be separated and an organic solvent using poly(arylene sulfide) resin (PAS) particles, characterized in that the method includes bringing the liquid containing the substance to be separated and the organic solvent into contact with the PAS particles to allow the substance to be separated contained in the liquid to be selectively adsorbed to the PAS particles and to be removed from the liquid, the PAS particles and the liquid do not contain water, and the substance to be separated is a compound containing a metal atom, where the metal atom is not an unreacted raw material or a by-product of polymerization reaction of the PAS.

EP 4 628 608 A1

## Description

### TECHNICAL FIELD

The present invention relates to a separation method for separating a substance to be separated and an organic solvent from the organic solvent containing the substance to be separated using poly(arylene sulfide) (which may be hereinafter abbreviated as PAS) resin particles as an adsorbent.

### BACKGROUND ART

In recent years, from the viewpoints of effective utilization of valuable resources for sustainable development and prevention of environmental pollution, techniques for efficiently recovering metal atoms, which are valuable resources, from a solution containing the metal atoms have been attracting attention. In particular, platinum group metals and noble metals, such as gold and silver, are highly valued, and their production countries are unevenly distributed. Thus, competition for recovering noble metals from waste liquid of solutions for industrial catalysts and metal plating, and the like is becoming intense.

For the method for recovering noble metals from waste liquids, solvent extraction methods have been put to practical use, but the treatment process is complicated, and there are problems of the increased size of equipment and the treatment of a large amount of the resulting waste liquid containing no noble metals. In addition, methods of bringing an adsorbent, such as activated carbon or an ion exchange resin, into contact with a waste liquid are also among the methods that have already been in practical use. However, activated carbon has a low selectivity for noble metals. Furthermore, ion exchange resins have high selectivity depending on the functional group of the side chain, but most of them have problems in that the use environment is limited to an aqueous system and in that they greatly swell or shrink in a solvent.

On the other hand, in recent years, it has been proposed to use a porous material composed of a PAS resin as an adsorbent by utilizing its properties of excellent heat resistance and chemical resistance. For example, Patent Literature 1 discloses the use of a recycled PAS resin as an adsorbent, particularly as a filtering material for removing ozone and $NO_2$, by utilizing the properties of the recycled PAS resin in that it has an increased specific surface area. In addition, for example, Patent Literature 2 discloses poly(phenylene sulfide) as an adsorbent composed of a microporous polymer composition with a component $\delta h$ for hydrogen bonding strength, which is a three-dimensional solubility parameter, of 1 to 5 ($cal^{1/2}cm^{-3/2}$).

### CITATION LIST

### PATENT LITERATURE

Patent Literature 1: JP 08-512891
Patent Literature 2: JP 06-327970 A

### SUMMARY OF INVENTION

### TECHNICAL PROBLEM

However, there are only a few disclosures relating to a separation method using an adsorbent that satisfies high metal selectivity and adsorption capacity in a non-aqueous environment. In addition, for ion exchange resins and the like known in the art, improvement in resistance to organic solvents and/or resistance to swelling and shrinkage by structural design tends to reduce the ion exchange rate and deteriorate the adsorption capacity. From the above, development of an adsorption material and a separation method applicable to a non-aqueous environment has been required.

Thus, an object to be achieved by the present invention is to provide a method for efficiently separating a metal atom, which is a substance to be separated, from a liquid containing the substance to be separated and an organic solvent.

### SOLUTION TO PROBLEM

As a result of various studies, the present inventors have found that PAS resin particles, when used as an adsorbent, exhibits excellent adsorption capacity also in a non-aqueous environment, and furthermore, the PAS resin has excellent chemical resistance, and thus the adsorbent is less susceptible to deterioration, swelling, or shrinkage resulting from a solvent, and is excellent in continuous use and recyclability, and completed the present invention.

That is, a separation method of the present disclosure relates to a method for separating a substance to be separated from a liquid containing the substance to be separated and an organic solvent using PAS resin particles, characterized in that

the method includes bringing the liquid containing the substance to be separated and the organic solvent into contact with the PAS resin particles to allow the substance to be separated contained in the liquid to be selectively adsorbed to the PAS resin particles and to be removed from the liquid,
the PAS resin particles and the liquid do not contain water, and the substance to be separated is a compound containing a metal atom, where the metal atom is not an unreacted raw material or a by-product of polymerization reaction of the PAS resin.

In addition, a method for producing a liquid of the present disclosure relates to a method for producing a liquid with a reduced amount of a substance to be separated, the method including separating the substance to be separated and an organic solvent from a liquid containing the substance to be separated and the organic solvent using PAS resin particles, characterized in that

the method includes bringing the liquid containing the substance to be separated into contact with the PAS resin particles to allow the substance to be separated contained in the liquid to be selectively adsorbed to the PAS resin particles and to be removed from the liquid, and
the PAS resin particles and the liquid do not contain water.

## ADVANTAGEOUS EFFECTS OF INVENTION

According to the present invention, there can be provided the method for separating a substance to be separated from a liquid containing the substance to be separated and an organic solvent.

## DESCRIPTION OF EMBODIMENTS

Hereinafter, an embodiment of the present disclosure will be described in detail. However, the scope of the present disclosure is not limited to an embodiment described here, and various modifications can be made without departing from the spirit of the present disclosure. In addition, when a plurality of upper limit values and lower limit values are described for a specific parameter, any upper limit value and any lower limit value of these upper limit values and lower limit values can be combined to provide a suitable numerical range.
A separation method of the present embodiment is

a method for separating a substance to be separated and an organic solvent from an organic solvent containing the substance to be separated using PAS resin particles, and is characterized in that
the method includes bringing the liquid containing the substance to be separated into contact with the PAS resin particles to allow the substance to be separated contained in the organic solvent to be selectively adsorbed to the PAS resin particles and to be removed from the organic solvent, and the PAS resin particles and the organic solvent do not contain water. This method will be described in detail below.

PAS Resin Particles

In the present disclosure, PAS resin particles are used as an adsorbent. The PAS resin particles refer to particles substantially composed of a PAS resin or a particulate PAS resin. The PAS resin used in the present disclosure has a resin structure having a structure including an aromatic ring and a sulfur atom bonded to each other as a repeating unit. Specifically, the PAS resin is a resin having a structural site represented by Formula (1) below as a repeating unit:

[Chem. 1]

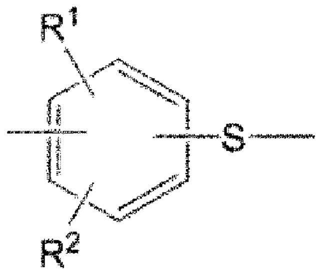

Formula (1)

where $R^1$ and $R^2$ each independently represent a hydrogen atom, an alkyl group having from 1 to 4 carbon atoms, a nitro group, an amino group, a phenyl group, a methoxy group, or an ethoxy group, and further as necessary a trifunctional structural site represented by General Formula (2) below as a repeating unit.

[Chem. 2]

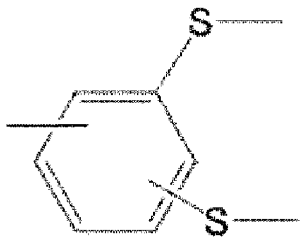

Formula (2)

The trifunctional structural site represented by Formula (2) is preferably in a range of 0.001 to 3 mol% and particularly preferably in a range of 0.01 to 1 mol% relative to a total number of moles of the structural site and other structural sites.

Here, in the structural site represented by General Formula (1), in particular, $R^1$ and $R^2$ in the formula are preferably hydrogen atoms from the viewpoint of mechanical strength of the PAS resin. In that case, examples include those represented by Formula (3) below, in which the sulfur atom is attached at the para position, and those represented by Formula (4) below, in which the sulfur atom is attached at the meta position.

[Chem. 3]

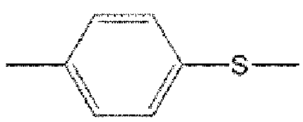

Formula (3)

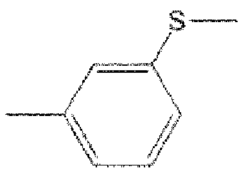

Formula (4)

Of these, in particular, the structure represented by General Formula (3), in which the sulfur atom is attached at the para position of the aromatic ring in the repeating unit, is preferred in terms of heat resistance and crystallinity of the PAS resin.

In addition, the PAS resin may contain not only the structural sites represented by General Formulas (1) and (2) but also structural sites represented by Structural Formulas (5) to (8) below:

[Chem. 4]

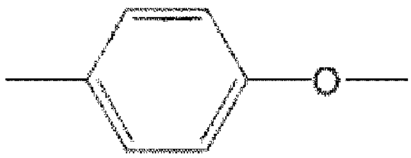

Formula (5)

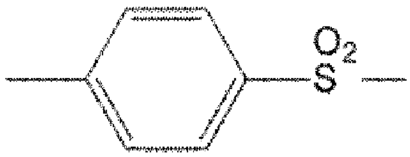

Formula (6)

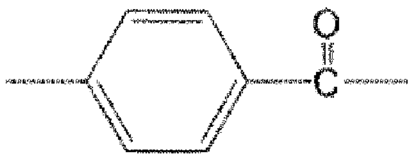

Formula (7)

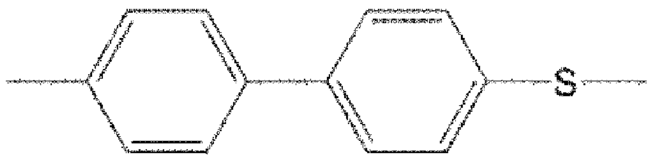

Formula (8)

in an amount of 30 mol% or less of a total amount of these structural sites and the structural sites represented by General Formulas (1) and (2). In particular, in the present disclosure, the structural sites represented by General Formulas (5) to (8) above are preferably in an amount of 10 mol% or less from the viewpoints of heat resistance and mechanical strength of the PAS resin. In the case where the PAS resin contains the structural sites represented by General Formulas (5) to (8) above, their binding modes may be a random copolymer or a block copolymer.

In addition, the PAS resin may have a naphthyl sulfide bond or the like in its molecular structure, and the amount thereof is preferably 3 mol% or less and particularly preferably 1 mol% or less relative to a total number of moles of the bond and other structural sites.

A polymerization method of the PAS resin is not particularly limited as long as the method is a known method, and examples include: (Polymerization Method 1) a method of polymerizing a dihalogenoaromatic compound in the presence of sulfur and sodium carbonate, if necessary, with addition of a polyhalogenoaromatic compound or another copolymerization component; (Polymerization Method 2) a method of polymerizing a dihalogenoaromatic compound in the presence of a sulfidizing agent and/or the like in a polar solvent, if necessary, with addition of a polyhalogenoaromatic compound or another copolymerization component; (Polymerization Method 3) a method of self-condensation of p-chlorothiophenol, if necessary, with addition of another copolymerization component; and (Production Method 4) a method of melt-polymerizing a diiodoaromatic compound and elemental sulfur while the pressure is reduced in the presence of a polymerization inhibitor that may have a functional group, such as a carboxy group or an amino group. Among these polymerization methods, the method of (Polymerization Method 2) is versatile and preferred. During the reaction, to adjust the degree of polymerization, an alkali metal salt of a carboxylic acid or a sulfonic acid may be added, or an alkali hydroxide may be added. Among the methods of (Polymerization Method 2) described above, the PAS resin is particularly preferably produced by a method for producing a PAS resin by introducing a hydrous sulfidizing agent into a mixture containing a heated organic polar solvent and a dihalogenoaromatic compound at such a rate that water can be removed from a reaction mixture, adding the dihalogenoaromatic compound and the sulfidizing agent, as necessary together with a polyhalogenoaromatic compound, in the organic polar solvent, and reacting them, in which an amount of water in the reaction system is controlled to a range of 0.02 to 0.5 mol per mol of the organic polar solvent (see JP 07-228699 A), or a method of adding a dihalogenoaromatic compound and, if necessary, a polyhalogenoaromatic compound or another copolymerization component, in the presence of a solid alkali metal sulfide and an aprotic polar organic solvent, and performing reaction while an alkali metal hydrosulfide and an organic acid alkali metal salt are controlled so that the amount of the organic acid alkali metal salt is 0.01 to 0.9 mol per mol of the sulfur source and an amount of water in the reaction system is controlled in a range of 0.02 mol per mol of the aprotic polar organic solvent (see WO 2010/058713).

Specific examples of the dihalogenoaromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and compounds having an alkyl group having from 1 to 18 carbon atoms as a nuclear substituent on the aromatic ring of each of the above compounds. Examples of the polyhalogenoaromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. In addition, the halogen atom contained in each of the above compounds is desired to be a chlorine atom or a bromine atom.

Furthermore, a crude reaction mixture obtained in the polymerization process and containing the PAS resin may be subjected to post-treatment. In that case, the post-treatment method is not particularly limited, either. Examples include: (Post-Treatment 1) a method in which, after completion of the polymerization reaction, first, the solvent is distilled off under reduced pressure or normal pressure from the reaction mixture as it is or after an acid or a base is added, then a solid after solvent distillation is washed once or twice or more with a solvent, such as water, a reaction solvent (or an organic solvent having an equivalent solubility for a low-molecular-weight polymer), acetone, methyl ethyl ketone, or an alcohol, and further neutralized, washed with water, filtered, and dried; (Post-Treatment 2) a method in which, after completion of the polymerization reaction, a solvent (solvent that is soluble in the solvent used in the polymerization and is a poor solvent for at least PAS), such as water, acetone, methyl ethyl ketone, an alcohol, an ethyl, a halogenated hydrocarbon, an aromatic hydrocarbon, or an aliphatic hydrocarbon, is added to the reaction mixture as a precipitating agent to precipitate solid products, such as PAS and an inorganic salt, and the solid products are filtered, washed, and dried; (Post-Treatment 3) a method in which, after completion of the polymerization reaction, a reaction solvent (or an organic solvent having an equivalent solubility for a low-molecular-weight polymer) is added to the reaction mixture, the mixture is stirred and then filtered to remove a low-molecular-weight polymer, then the resultant is washed once or twice or more with a solvent, such as water, acetone, methyl ethyl ketone, or an alcohol, and then neutralized, washed with water, filtered, and dried; (Post-Treatment 4) a method in which, after completion of the polymerization reaction, water is added to the reaction mixture to wash with water, the resultant is filtered and as necessary acid-treated by adding an acid during water washing, and the resultant is dried; (Post-Treatment 5) a method in which, after completion of the polymerization reaction, the reaction mixture is filtered, and as necessary, the resultant is washed once or twice or more with a reaction solvent, and the resultant is further washed with water, filtered, and dried; and (Post-Treatment 6) a method in which, after completion of the polymerization reaction, the reaction mixture is desolventized to obtain a slurry material containing crude PAS, further the slurry material containing crude PAS is brought into contact with water and an oxygen atom-containing solvent having from 1 to 3 carbon atoms to turn the crude PAS into porous particles, and the resulting porous particles are washed with carbonated water, and filtered.

Examples of the oxygen atom-containing solvent having from 1 to 3 carbon atoms that is applicable in the post-treatment method as exemplified in (Post-Treatment 6) above include at least one selected from the group consisting of alcohols and ketones. Examples of the alcohols (also referred to as alcoholic solvents or alcohol solvents) include methyl alcohol, ethyl alcohol, n-propyl alcohol, isopropyl alcohol, ethylene glycol, propylene glycol, and 2-methoxyethyl alcohol. In addition, examples of the ketones (also referred to as ketonic solvents or ketone solvents) include acetone. In the present disclosure, a monohydric alcohol having 3 or less carbon atoms is preferably used because the remaining carboxyalkylamino group-containing compound can be efficiently removed.

In the post-treatment method, such as those exemplified in (Post-Treatment 1) to (Post-Treatment 6) described above, the PAS resin may be dried in vacuo or may be dried in air or in an atmosphere of an inert gas, such as nitrogen.

Melt Viscosity

A melt viscosity of the PAS resin constituting the PAS resin particles used in the present embodiment is not particularly limited, and a melt viscosity (V6) measured at 300°C is in a range preferably from 1 [Pa·s] or more, more preferably from 3 [Pa·s] or more, and even more preferably from 5 [Pa·s] or more, preferably to 800 [Pa·s] or less, more preferably to 500 [Pa·s] or less, and even more preferably to 200 [Pa·s] or less, where the melt viscosity (V6) of the PAS resin is a measured value of a melt viscosity measured after holding the PAS resin at 300°C, a load of $1.96 \times 10^6$ Pa, and L/D = 10 (mm)/1 (mm) for 6 minutes using a flow tester CFT-500D available from Shimadzu Corporation.

Non-Newtonian Index

The non-Newtonian index of the PAS resin constituting the PAS resin particles used in the present embodiment is not particularly limited and is preferably from 0.90 or more and more preferably from 0.95 or more, preferably to 1.25 or less and more preferably to 1.20 or less. In the present disclosure, the non-Newtonian index (N value) is a value determined by measuring a shear rate (SR) and a shear stress (SS) using a capillary rheometer under conditions of a melting point + 20°C and a ratio of an orifice length (L) to an orifice diameter (D), L/D = 40, and calculating using the equation below. A non-Newtonian index (N value) closer to 1 indicates that the structure is closer to a linear structure, and a higher non-Newtonian index (N value) indicates that the structure is more branched.

[Equation 1]

$$SR = K \cdot SS^{N}$$

where SR represents a shear rate ($sec^{-1}$), SS represents a shear stress ($dyn/cm^2$), and K represents a constant.

Zeta Potential

The PAS resin constituting the PAS resin particles used in the present embodiment has a zeta potential of preferably -50 mV or more and more preferably -30 mV or more as measured by a streaming potential method under conditions of pH 7.8 to 8.2. The zeta potential of the PAS resin refers to an average value when about 100 mg of the PAS resin particles are filled in a cylinder cell and the zeta potential of the resin particle surface is measured three times in a 1 mmol/L KCl aqueous solution as an electrolyte at a measurement temperature of 22 to 26°C using SurPASS3 (Anton Paar GmbH). To stabilize the measured values, it is preferred to sieve the PAS resin to select and use a PAS resin with a particle size of 0.05 to 1.0 mm.

Specific Surface Area

The specific surface area of the PAS resin constituting the PAS resin particles used in the present embodiment is porous particles in a range preferably from 1 $m^2/g$ or more, more preferably from 10 $m^2/g$ or more, and even more preferably from 50 $m^2/g$ or more, preferably to 300 $m^2/g$ or less, more preferably to 250 $m^2/g$ or less, even more preferably to 200 $m^2/g$ or less, and particularly preferably to 150 $m^2/g$ or less. The specific surface area of the PAS resin can be measured by a method described in Examples. The specific surface area of the PAS resin is a BET specific surface area measured by pretreating the PAS resin particles at 60°C under vacuum for 4 hours and then using "Tristar II 3020" available from Shimadzu Corporation.

Particle Size

The PAS resin constituting the PAS resin particles used in the present embodiment is preferably particles. The particle size of the PAS resin is not particularly limited as long as the effects of the present invention are not impaired, and from the viewpoint of excellent adsorption properties, the upper limit value is preferably about 2 mm, more preferably about 500 μm, and even more preferably about 300 μm. On the other hand, from the viewpoints of excellent handling properties and excellent liquid feeding properties when the PAS resin is packed in a column or the like, the lower limit value is preferably 10 μm, more preferably about 20 μm, and even more preferably about 30 μm. The average particle size of the PAS resin is an average particle size (D50) determined based on a particle size distribution measured according to a common procedure using a laser diffraction scattering particle size distribution analyzer (Microtrac MT3300EXII).

The surface of the PAS resin particles is preferably wet with an organic solvent. Thus, the PAS resin particles of the present embodiment preferably contain an organic solvent. In particular, the organic solvent is preferably an organic solvent contained in a liquid containing a substance to be separated from the viewpoint of affinity in separation. The proportion of the organic solvent in the PAS resin particles is not particularly limited, and from the viewpoint of reducing the transportation cost, the proportion is preferably 500 parts by mass or less, more preferably 250 parts by mass or less, and even more preferably 150 parts by mass or less per 100 parts by mass of the PAS resin particles. The lower limit value is not particularly limited and may be 0 parts by mass (dry product), and from the viewpoint of excellent adsorption ratio at the start of use, the lower limit value is preferably 1 part by mass or more and more preferably 10 parts by mass or more.

The PAS resin particles used in the present embodiment are preferably those in which an additional component other than the PAS resin particles (however, excluding an inevitable component derived from the polymerization reaction of the PAS resin and water) is absent as an external additive component to the PAS resin particles (a component present outside the PAS resin particles, mainly a component present at the interface between the PAS resin particles and the liquid). The additional component preferably absent as an external additive component is, for example, a known and commonly used additive, such as a surfactant (dispersant), a colorant, an antistatic agent, an antioxidant, a heat-resistant stabilizer, an ultraviolet stabilizer, an ultraviolet absorber, a foaming agent, a flame retardant, a flame retardant aid, a rust inhibitor, a mold release agent, and a coupling agent. "An additional component other than the PAS resin particles is absent as a component constituting the PAS resin particles" means, in other words, that the content of the PAS resin in the particles is in a range of preferably 95 mass% or more, more preferably 99 mass% or more, and even more preferably 99.9 mass% or more, excluding the inevitable component and water. The upper limit value of the content is not particularly limited and

means that the content is in a range of 100 mass% or less.

Furthermore, the PAS resin particles are preferably those in which an additional component other than the PAS resin (however, excluding an inevitable component derived from the polymerization reaction of the PAS resin) is absent as an internal additive component constituting the particles (a component present inside the PAS resin particles by melt kneading). The additional component preferably absent as an internal additive component is, for example, a known and commonly used additive, such as a surfactant (dispersant), a colorant, an antistatic agent, an antioxidant, a heat-resistant stabilizer, an ultraviolet stabilizer, an ultraviolet absorber, a foaming agent, a flame retardant, a flame retardant aid, a rust inhibitor, a mold release agent, and a coupling agent. "An additional component other than the PAS resin is absent as a component constituting the particles" means, in other words, that the content of the PAS resin contained in the PAS resin particles is in a range of preferably 95 mass% or more, more preferably 99 mass% or more, and even more preferably 99.9 mass% or more, excluding the inevitable component. The upper limit value of the content is not particularly limited and means that the content is in a range of 100 mass% or less.

Examples of the inevitable component derived from the polymerization reaction of the PAS resin include unreacted raw materials used in the polymerization reaction and by-products, in particular, metal atom-containing components among them, such as a sulfidizing agent (an alkali metal sulfide or an alkali metal hydrosulfide) and an alkali metal halide; and a carboxyalkylamino group-containing compound represented by General Formula (1) below:

[Chem. 5]

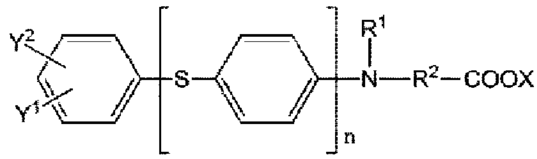

(1)

where n is from 0 to 2, $Y^1$ represents a halogen atom, $Y^2$ represents a hydrogen atom or a halogen atom, $R^1$ represents a hydrogen atom, an alkyl group having from 1 to 3 carbon atoms, or a cyclohexyl group, $R^2$ represents an alkylene group having from 3 to 5 carbon atoms, and X represents an alkali metal atom.

When the particles of the PAS resin contain the external additive or internal additive described above, the proportion of the sulfur component contributing to the adsorption capacity on the particle surface decreases, and the affinity of the particles for the solution decreases, which may result in reduction in adsorption properties.

The PAS resin of the present disclosure has excellent chemical resistance and thus has excellent resistance to swelling and shrinkage when brought into contact with an organic solvent. In addition, the PAS resin is less susceptible to material deterioration, such as decomposition by an organic solvent. Thus, when the PAS resin is used as an adsorbent, decomposition products and the like do not elute into a liquid containing a substance to be separated, and secondary contamination is less likely to occur. Furthermore, the performance is not deteriorated in continuous use, and the treatment environment is not limited in regeneration treatment.

Liquid

The liquid to be brought into contact with the PAS resin particles in the present embodiment contains a substance to be separated and an organic solvent as essential components. In addition, the liquid does not substantially contain water. Furthermore, the liquid does not substantially contain a surfactant.

Substance to Be Separated

Examples of the substance to be separated that is adaptable to the present embodiment include metal atoms or compounds containing a metal atom (however, excluding a metal atom that is an unreacted raw material or a by-product of polymerization reaction of the PAS resin). Examples of the metal atom include at least one selected from the group consisting of alkali metal atoms, alkaline earth metal atoms, transition metal atoms, lanthanoid atoms, and actinoid atoms. These may be present as an elemental metal atom or may be bonded to another atom and present as a compound or an alloy. Among these, the metal atom is preferably a transition metal and more preferably a metal atom classified as a soft acid in the HSAB theory. This is considered because the PAS resin as an adsorbent contains a sulfur atom, which is classified as a soft base in the HSAB theory, as a main component.

Examples of the metal atom or the compound (metal salt) containing a metal atom of the substance to be separated include, but are not limited to, alkali metal atoms, such as potassium, rubidium, cesium, and francium; alkaline

earth metal atoms, such as calcium, strontium, barium, and radium; transition metal atoms, such as scandium, titanium, vanadium, chromium, manganese, iron, cobalt, nickel, copper, yttrium, zirconium, niobium, molybdenum, technetium, ruthenium, rhodium, palladium, silver, cadmium, lanthanoid, hafnium, tantalum, tungsten, rhenium, osmium, iridium, platinum, gold, and mercury; and base metal atoms, such as aluminum, zinc, gallium, germanium, indium, tin, antimony, mercury, thallium, lead, bismuth, and polonium; as well as salts containing them. Examples of the lanthanoid include lanthanum, cerium, praseodymium, neodymium, promethium, samarium, europium, gadolinium, terbium, dysprosium, holmium, erbium, thulium, ytterbium, and lutetium. In addition, examples of the actinoid include actinium, thorium, protactinium, uranium, neptunium, plutonium, americium, curium, berkelium, californium, einstanium, fermium, mendelevium, nobelium, and lawrencium. Among these, a metal atom classified as a soft acid in the HSAB rule or a compound containing the metal atom is easily adsorbed to the PAS resin and thus is preferred. For example, ruthenium, rhodium, palladium, silver, cadmium, osmium, iridium, platinum, gold, mercury, thallium, and lead, as well as their metal salts are preferred, and gold, platinum, and palladium, as well as their metal salts are particularly preferred.

The metal atom of the substance to be separated may be a metal complex in which a ligand, such as an acid, a base, or an organic substance, is coordinated. The three-dimensional structure is not particularly limited as long as the effects of the present invention are not impaired; examples include a regular tetrahedral structure, a square planar structure, a trigonal bipyramidal structure, a quadrangular pyramid structure, and a regular octahedral structure, and a square planar structure is particularly preferred. In addition, the coordination number is not particularly limited, either, and the metal complex is preferably from four- to seven-coordinated from the viewpoint of stability. The molecular weight of the metal complex is not particularly limited and is preferably 2000 or less from the viewpoint of adsorptive properties. When a metal complex is a substance to be separated, a complex with a high ligand exchange rate is preferred, and a metal complex containing palladium (II) is more preferred.

Organic Solvent

The organic solvent adaptable to the present embodiment is not particularly limited, and examples include aromatic hydrocarbon solvents, such as toluene and xylene; halogen-based solvents, such as chloroform, bromoform, methylene chloride, 1,2-dichloroethane, 1,1,1-trichloroethane, chlorobenzene, and 2,6-dichlorotoluene; alcoholic solvents, such as methanol and ethanol; ketonic solvents, such as acetone; nitrile solvents, such as acetonitrile; etheric solvents, such as diethyl ether, tetrahydrofuran, and diisopropyl ether; amides, such as formamide, acetamide, N-methylformamide, N,N-dimethylformamide, N,N-dimethylacetamide, tetramethylurea, N-methyl-2-pyrrolidone, 2-pyrrolidone, N-methyl-ε-caprolactam, ε-caprolactam, hexamethylphosphoramide, N-dimethylpropyleneurea, and 1,3-dimethyl-2-imidazolidinone acid; ureas and lactams; and polar solvents, such as dimethyl sulfoxide, trimethyl phosphate, N,N-dimethylimidazolidinone, and methyl ethyl ketone. Among these, a solvent with a dielectric constant ε (20°C) in a range from 2 or more and 35 or less is preferred.

In the present embodiment, the amount of the substance to be separated contained in the liquid to be brought into contact with the PAS resin particles is not particularly limited, and the metal concentration of the substance to be separated in the liquid is preferably 1000 ppm or less, more preferably 200 ppm or less, and even more preferably 20 ppm or less. With the metal concentration in such a range, the substance to be separated can be efficiently adsorbed to the PAS resin particles.

Processes

A separation method using the PAS resin particles of the present disclosure includes bringing a liquid containing a substance to be separated and an organic solvent into contact with the PAS resin particles to allow the substance to be separated contained in the organic solvent to be selectively adsorbed to the PAS resin particles and to be removed from the liquid. In this process, for the contact between the liquid and the PAS resin particles, for example, by adding the PAS resin particles to the liquid, the substance to be separated contained in the liquid can be selectively adsorbed to the PAS resin particles and removed from the liquid. At this time, to suppress aggregation of the PAS resin particles, a mechanical shearing force, such as stirring, vibration, and/or ultrasonic irradiation, can be applied.

The proportion of the PAS resin particles relative to the liquid containing the substance to be separated is not particularly limited, and when measurement or the like of the concentration of a substance to be separated is performed in advance and the substance to be separated is a metal, the PAS resin particles can be used so that the weight ratio relative to the substance to be separated is in a range preferably from once or more, more preferably from 5 times or more, and even more preferably from 10 times or more, preferably to 1000 times or less, more preferably to 500 times or less, and even more preferably to 100 times or less.

Furthermore, the separation method using the PAS resin particles of the present disclosure may include a solid-liquid separation process of separating the PAS resin particles and a liquid. Examples of the solid-liquid separation include sedimentation separation, flotation separation, sand filtration, centrifugal separation, precision membrane filtration, and

ultrafiltration membrane filtration. This can facilitate regeneration treatment for taking out the PAS resin particles having adsorbed a substance to be separated after the solid-liquid separation and removing the adsorbed substance to be separated. This can also facilitate the reutilization of the PAS resin particles.

In addition, for the contact between the PAS resin particles and the liquid containing the substance to be separated, for example, by filling the PAS resin particles in a column or immobilizing the PAS resin particles by supporting them on a fiber or a membrane, and supplying the liquid containing the substance to be separated to the PAS resin particles, the substance to be separated contained in the liquid can also be selectively adsorbed to the PAS resin particles and removed from the liquid. For this procedure, examples of the separation treatment performed in a batch manner include a method of supplying a liquid containing a substance to be separated to a container with the PAS resin particles immobilized therein, and examples of the separation treatment performed in a continuous manner include a method of immobilizing the PAS resin particles in a flow path in advance and supplying a liquid containing a substance to be separated to the flow path. For the immobilization, a known method can be used as long as the PAS resin particles can be separated from the liquid by segregating the PAS resin particles with a wall with a pore size through which the liquid can pass but the PAS resin particles cannot. The immobilization of the PAS resin particles can facilitate the solid-liquid separation between the PAS resin particles and the liquid, but PAS resin particles with a small particle size may be incorporated in the liquid after the solid-liquid separation. Thus, when it is necessary to avoid this, for the solid-liquid separation, a solid-liquid separation process can be performed separately, such as sedimentation separation, flotation separation, sand filtration, centrifugal separation, precision membrane filtration, or ultrafiltration membrane filtration.

In addition, when the separation treatment is performed in a continuous manner as described above, the space velocity (SV) of the liquid containing the substance to be separated in the flow path is preferably 1000 or less and more preferably 100 or less. The separation treatment performed at an SV in such a range provides excellent efficiency.

The contact between the PAS resin particles of the present embodiment and the liquid containing the substance to be separated is made in the absence of a surfactant, that is, in an environment where no surfactant is present.

It is not necessarily clear why the separation method of the present application provides excellent separation of a substance to be separated and excellent continuous use and recyclability of an adsorbent due to having resistance to organic solvents but is presumed to be due to the following mechanism. That is, an ion exchange resin or a chelate resin, which is a technique known in the art, separates a target substance by ion exchange or coordination of a polar functional group in the side chain with a substance to be separated. On the other hand, the PAS resin used as an adsorbent in the present application has no polar functional group in the side chain and is presumed to separate a target substance by coordination of a sulfur atom in the main chain with the substance to be separated. In addition, the PAS chain is presumably crystallized to have chemical resistance and separates the target substance by coordination with the sulfur atom exposed on the surface. These are presumed to exhibit the effects described above. The above mechanism is merely a presumption, and a case where the effects of the present invention are exhibited for another reason is also included in the technical scope of the present invention.

## EXAMPLES

The present invention will be specifically described with reference to examples below. These examples are illustrative and not limiting. Hereinafter, "%" and "part" are based on mass unless otherwise specified.

### Synthesis Example 1

### Polymerization Process of PAS Resin

In a 150-L autoclave equipped with a stirring blade, a pressure gauge, a thermometer, a condenser, a decanter, and a rectification column, 33.222 kg (226 mol) of p-dichlorobenzene (hereinafter abbreviated as DCB), 2.280 kg (23 mol) of NMP, 27.300 kg (230 mol) of 47.23 mass% sodium hydrosulfide, and 18.533 kg (228 mol) of 49.21 mass% sodium hydroxide were placed. The temperature was raised to 173°C over 5 hours under a nitrogen atmosphere under stirring to distill off 27.3 kg of water, and then the autoclave was sealed. The DCB distilled off by azeotropy during dehydration was separated by the decanter and returned into the autoclave at any time. In the autoclave after completion of dehydration, an anhydrous sodium sulfide composition was dispersed in DCB. Furthermore, the internal temperature was cooled to 160°C, 47.492 kg (479 mol) of NMP was placed, and the temperature was raised to 185°C. When the pressure reached 0.00 MPa, a valve connecting the rectification column was opened, and the internal temperature was raised to 200°C over 1 hour. At this time, the temperature at the outlet of the rectification column was controlled to 110°C or lower by cooling and valve opening. A mixed vapor of DCB and water distilled off was condensed by the condenser and separated by the decanter, and DCB was returned to the autoclave. The amount of water distilled off was 179 g. Next, the internal temperature was raised from 200°C to 230°C over 3 hours, the mixture was stirred for 1 hour, then the internal temperature was raised to 250°C, and the mixture was stirred for 1 hour. After completion of the reaction, the internal temperature of the

autoclave was cooled from 250°C to 235°C. After the internal temperature reached 235°C, a bottom valve of the autoclave was opened to remove N-methyl-2-pyrrolidone by flushing into a 150-L vacuum stirring dryer (desolventizer jacket temperature 120°C) while the reduced pressure is being kept. As a result of cooling to room temperature and sampling, a PPS mixture with an N.V. of 55% was obtained.

Purification Process of PAS Resin

In a flask, 400 g of the PPS mixture obtained in Synthesis Example 1 and 317 g of methanol were placed and mixed by stirring at 40°C for 30 minutes. The slurry was filtered with a Kiriyama funnel under reduced pressure, pressed from above to render it compact, and further filtered by pouring 634 g of methanol from above in several portions. Furthermore, a cake prepared by the filtration was transferred to a beaker and crushed into powder with a medicine spoon, and 634 g of water at 70°C was poured to the powder, and they were mixed by stirring for 30 minutes. The slurry was filtered with a Kiriyama funnel under reduced pressure, pressed from above to render it compact, and further filtered by pouring 845 g of water at 70°C from above in several portions. The cake was transferred to a beaker, 636 g of carbonated water was poured into the beaker, and they were mixed by stirring for 1 hour. The slurry was filtered with a Kiriyama funnel under reduced pressure, pressed from above to render it compact, further filtered by pouring 848 g of carbonated water from above in several portions, and a wet cake was obtained. The water content of the wet cake was 45 wt. %.

Preparation of PAS Resin/Ethanol Cake

In a flask, 10 g of the PPS resin wet cake obtained in the PAS resin purification process and 30 mL of ethanol were placed and stirred at room temperature for 10 minutes. The slurry was filtered with a Kiriyama funnel under reduced pressure, pressed from above to render it compact, and 20 mL of ethanol was poured to perform cake filtration. This operation was repeated three times, and the water cake was completely replaced with an ethanol cake. The resulting ethanol cake of the PPS resin had a liquid content of 56.0 wt.%. This is referred to as an adsorbent (1).

Synthesis Example 2

Preparation of PAS Resin/Acetone Cake

Procedures were performed in accordance with Synthesis Example 1 except for changing ethanol to acetone. The resulting acetone cake of the PPS resin had a liquid content of 43.2 wt.%. This is referred to as an adsorbent (2).

Synthesis Example 3

Preparation of PAS Resin/DMF Cake

Procedures were performed in accordance with Synthesis Example 1 except for changing ethanol to DMF. The resulting DMF cake of the PPS resin had a liquid content of 52.0 wt.%. This is referred to as an adsorbent (3).

Synthesis Example 4

Preparation of PAS Resin/Chloroform Cake

Procedures were performed in accordance with Synthesis Example 1 except for changing ethanol to chloroform. The resulting chloroform cake of the PPS resin had a liquid content of 75.1 wt.%. This is referred to as an adsorbent (4).

Production Example 1

Adjustment of Liquid Containing Substance to Be Separated and Organic Solvent

A substance to be separated and an organic solvent were mixed so that the metal concentration was 2 mmol/L, and the mixture was stirred at room temperature for 1 hour. The resulting liquid was filtered, then the metal concentration of the filtrate was quantified with an atomic absorption spectrophotometer ("AA-7000" available from Shimadzu Corporation), and the results were shown in Table 1.

Examples 1 to 6 and Comparative Examples 1 to 6

(1) Evaluation of Adsorption Ratio

5 mL of a solution prepared with components shown in Tables 1 and 2 according to Production Example 1 above and each adsorbent were placed in a test tube so that a resin was contained in an amount of 0.025 g. This was stirred by shaking in the horizontal direction at a liquid temperature of 30°C and at 200 rpm for 3 hours using a shaker ("SA300" available from Yamato Scientific Co., Ltd.). Then, the mixture was separated by filtration, and a liquid phase component and an adsorbent were each obtained. The concentration of a substance to be separated in the liquid phase component was quantified with an atomic absorption spectrophotometer, and the difference in concentrations before and after adsorption was calculated as the adsorption ratio (%). The results are shown in Tables 1 and 2.
In Table 1, the adsorption ratio of 50% or more is represented as "○", the adsorption ratio of 10% or more and less than 50% is represented as "△", and the adsorption ratio of less than 10% is represented as "×".

(2) Evaluation of Resistance to Organic Solvents (Elution Ratio)

For each adsorbent described in Tables 1 and 2, if the adsorbent contained a solvent, an organic solvent was removed by vacuum drying at 60°C over 8 hours, and only a resin was obtained. In a 200-mL eggplant-shaped flask, 1.5 g of the resulting resin was dispensed, and 50 mL of the same type of organic solvent as the organic solvent removed and zeolite were further added. A heater and a cooling tube were attached to the eggplant-shaped flask, and the mixture was refluxed at the boiling point of each solvent for 3 hours, then cooled to room temperature, and filtered. The zeolite was removed from the residual, and the remainder was vacuum-dried at 60°C over 8 hours, and only the resin was recovered, weighed, and the elution ratio (%) was calculated from the following equation.

$$\text{Elution ratio (\%)} = \{(1.5\text{ g} - \text{weight after reflux})/1.5\text{ g}\} \times 100$$

[Table 1]

| | | Example 1 | Example 2 | Example 3 | Example 4 | Example 5 | Example 6 |
|---|---|---|---|---|---|---|---|
| Adsorbent | | Adsorbent (1) | Adsorbent (2) | Adsorbent (3) | Adsorbent (2) | Adsorbent (4) | Adsorbent (4) |
| Separation object | | Palladium chloride | | | Palladium acetate | | Chlorotris (triphenylphosphine) rhodium (I) |
| Solvent species | | Ethanol | Acetone | DMF | Acetone | Chloroform | Chloroform |
| Adsorption ratio | | ○ | ○ | ○ | △ | ○ | △ |
| Resistance to organic solvents | % | < 1 | < 1 | < 1 | < 1 | < 1 | < 1 |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Adsorbent | | Ion exchange resin | | | Chelate resin | | |
| Separation object | | Palladium chloride | | | | | |
| Solvent species | | Ethanol | Acetone | DMF | Ethanol | Acetone | DMF |
| Adsorption ratio | | △ | ○ | △ | △ | ○ | △ |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Resistance to organic solvents | % | 13 | 7 | 17 | 11 | 3 | 15 |

From Tables 1 and 2, it was shown that the PAS resin has an excellent adsorption ratio of a metal atom-containing compound dissolved in an organic solvent containing no water. In addition, it was shown that the elution ratio is small, and thus the adsorbent has excellent resistance to organic solvents and can suppress deterioration, swelling, and shrinkage. From the above, the separation methods of the examples were found to be separation methods that achieve both high adsorption capacity and organic solvent properties in a non-aqueous environment.

## Claims

**1.** A method for separating a substance to be separated from a liquid containing the substance to be separated and an organic solvent using poly(arylene sulfide) resin particles, wherein

the method comprises bringing the liquid containing the substance to be separated and the organic solvent into contact with the poly(arylene sulfide) resin particles to allow the substance to be separated contained in the liquid to be selectively adsorbed to the poly(arylene sulfide) resin particles and to be removed from the liquid,
the poly(arylene sulfide) resin particles and the liquid do not contain water, and
the substance to be separated is a compound containing a metal atom, where the metal atom is not an unreacted raw material or a by-product of polymerization reaction of the poly(arylene sulfide) resin.

**2.** The separation method according to claim 1, wherein the substance to be separated is a transition metal atom.

**3.** The separation method according to claim 1 or 2, wherein a zeta potential of the poly(arylene sulfide) resin particles is -50 mV or more,
where the zeta potential is a value measured under conditions of pH 7.8 to 8.2 by a streaming potential method.

**4.** The separation method according to claim 1 or 2, wherein the contact between the liquid containing the substance to be separated and the organic solvent and the poly(arylene sulfide) resin particles is in the absence of a surfactant.

**5.** The separation method according to claim 1 or 2, wherein the substance to be separated is a square planar metal complex.

**6.** The separation method according to claim 5, wherein the metal complex has a molecular weight of 2000 or less.

**7.** The separation method according to claim 1 or 2, wherein the poly(arylene sulfide) resin particles further comprise an organic solvent.

**8.** A method for producing a liquid with a reduced amount of a substance to be separated, the method comprising separating the substance to be separated and an organic solvent from a liquid containing the substance to be separated and the organic solvent using poly(arylene sulfide) resin particles, wherein

the method comprises bringing the liquid containing the substance to be separated into contact with the poly(arylene sulfide) resin particles to allow the substance to be separated contained in the liquid to be selectively adsorbed to the poly(arylene sulfide) resin particles and to be removed from the liquid, and
the poly(arylene sulfide) resin particles and the liquid do not contain water.

**9.** The method for producing a liquid according to claim 8, wherein the substance to be separated is a compound containing a metal atom, where the metal atom is not an unreacted raw material or a by-product of polymerization reaction of the poly(arylene sulfide) resin.

## INTERNATIONAL SEARCH REPORT

International application No.
**PCT/JP2023/034216**

**A. CLASSIFICATION OF SUBJECT MATTER**

***C22B 3/24***(2006.01)i; ***C08G 75/0281***(2016.01)i; ***B01J 20/26***(2006.01)i
FI: B01J20/26 E; C08G75/0281; C22B3/24 101

According to International Patent Classification (IPC) or to both national classification and IPC

**B. FIELDS SEARCHED**

Minimum documentation searched (classification system followed by classification symbols)

C22B3/24; C08G75/0281; B01J20/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 7006854 B1 (DIC CORP.) 10 February 2022 (2022-02-10) entire text | 1-9 |
| P, A | JP 7306591 B1 (DIC CORP.) 11 July 2023 (2023-07-11) entire text | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/034216**

| Patent document cited in search report | Publication date (day/month/year) | Patent family member(s) | Publication date (day/month/year) |
| --- | --- | --- | --- |
| JP 7006854 B1 | 10 February 2022 | US 2023/0174392 A1<br>entire text<br>EP 4154959 A1<br>KR 10-2022-0158279 A<br>CN 115697514 A | |
| JP 7306591 B1 | 11 July 2023 | WO 2023/079867 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8512891 A
- JP 6327970 A
- JP 7228699 A
- WO 2010058713 A